# EUROPEAN PATENT APPLICATION

(11) **EP 4 215 841 A1**
(43) Date of publication of application: **26.07.2023**
(21) Application number: 20954134.1
(22) Date of filing: 17.09.2020
(51) Int. Cl.: F25B 1/00

(54) **REFRIGERATION-CYCLE DEVICE, AIR CONDITIONER COMPRISING SAME, AND METHOD FOR CONTROLLING REFRIGERATION-CYCLE DEVICE**

(71) Applicant: MITSUBISHI ELECTRIC CORPORATION, Chiyoda-ku Tokyo 100-8310 (JP)
(72) Inventor: KANATANI, Toshiki, Tokyo 100-8310 (JP); ISHIYAMA, Hiroki, Tokyo 100-8310 (JP)
(74) Representative: Pfenning, Meinig & Partner mbB
(86) International application number: PCT/JP2020/035330
(87) International publication number: WO 2022/059149

(57) **Abstract**

A controller (90) is configured to: execute control for prohibiting an operating frequency of a compressor (10) from increasing (i) when a stop frequency of the compressor (10) exceeds a prescribed value and (ii) when a degree of superheat of the refrigerant output from the compressor (10) is lower than a set value after start of an operation of the compressor (10), the stop frequency being a frequency at which the compressor (10) stops when the degree of superheat is lower than the set value; and permit the operating frequency of the compressor (10) to increase when the stop frequency is equal to or less than the prescribed value.

## Description

### TECHNICAL FIELD

The present disclosure relates to a refrigeration cycle apparatus, an air conditioner including the refrigeration cycle apparatus, and a method of controlling the refrigeration cycle apparatus.

### BACKGROUND ART

In a refrigeration cycle apparatus used in an air conditioner and the like, in order to ensure lubricity in a compressor that compresses refrigerant, refrigeration oil is present inside the compressor. When liquid refrigerant is present inside the compressor, the refrigeration oil may flow out together with the refrigerant to a refrigerant circuit during the operation of the compressor. When the amount of refrigeration oil inside the compressor decreases, there is a possibility that poor lubricity may cause a failure in the compressor.

Normally, when the operation of the compressor is started, the amount of liquid refrigerant inside the compressor decreases as time passes, and thus, the amount of refrigeration oil flowing out to the refrigerant circuit decreases. Further, the refrigeration oil having flowed out to the refrigerant circuit also circulates through the refrigerant circuit and returns to the compressor. This ensures the amount of refrigeration oil inside the compressor.

However, when the compressor is operating intermittently at a low speed, the liquid refrigerant inside the compressor is less likely to be discharged, with the result that the amount of refrigeration oil flowing out to the refrigerant circuit (the flowing-out amount of refrigeration oil relative to the circulation amount of refrigerant) is continued to be large. Further, the compressor may stop before the refrigeration oil having flowed out to the refrigerant circuit circulates through the refrigerant circuit and then returns to the compressor. Thereby, the amount of refrigeration oil inside the compressor may decrease, so that the compressor may fail.

In order to avoid the situation as described above, Japanese Patent Laying-Open No. 2011-242097 (PTL 1) discloses that the degree of wetness of the refrigerant inside the compressor is determined and, based on the determination result, the rotation speed (the operating frequency) of the compressor is temporarily prohibited from increasing (see PTL 1).

### CITATION LIST

### PATENT LITERATURE

PTL 1: Japanese Patent Laying-Open No. 2011-242097

### SUMMARY OF INVENTION

### TECHNICAL PROBLEM

However, when the operating frequency of the compressor is uniformly prohibited from increasing based on the degree of wetness of the refrigerant inside the compressor, the operation load of the refrigeration cycle apparatus is unnecessarily suppressed, with the result that the refrigeration performance of the refrigeration cycle apparatus may degrade.

The present disclosure has been made to solve the above-described problems. It is an object of the present disclosure to provide a refrigeration cycle apparatus, an air conditioner including the refrigeration cycle apparatus, and a method of controlling the refrigeration cycle apparatus, by which the refrigeration performance can be ensured while preventing refrigeration oil inside a compressor from decreasing and thus causing a failure in the compressor.

### SOLUTION TO PROBLEM

A refrigeration cycle apparatus of the present disclosure includes: a compressor configured to compress refrigerant; and a controller configured to control the compressor. The controller is configured to: execute control for prohibiting an operating frequency of the compressor from increasing (i) when a stop frequency of the compressor exceeds a prescribed value and (ii) when a degree of superheat of the refrigerant output from the compressor is lower than a set value after start of an operation of the compressor, the stop frequency being a frequency at which the compressor stops when the degree of superheat is lower than the set value; and permit the operating frequency of the compressor to increase when the stop frequency is equal to or lower than the prescribed value.

Further, a method of controlling a refrigeration cycle apparatus of the present disclosure includes: determining whether or not a degree of superheat of refrigerant output from a compressor configured to compress the refrigerant is lower than a set value after start of an operation of the compressor; when it is determined that the degree of superheat is lower than the set value, determining whether or not a stop frequency of the compressor exceeds a prescribed value, the stop frequency being a frequency at which the compressor stops when the degree of superheat is lower than the set value; when it is determined that the stop frequency exceeds the prescribed value, executing control for prohibiting an operating frequency of the compressor from increasing; and when it is determined that the stop frequency is equal to or lower than the prescribed value, permitting the operating frequency of the compressor to increase.

### ADVANTAGEOUS EFFECTS OF INVENTION

According to the refrigeration cycle apparatus, the air conditioner including the refrigeration cycle apparatus, and the method of controlling the refrigeration cycle apparatus as described above, the refrigeration performance can be ensured while preventing the refrigeration oil inside the compressor from decreasing and thus causing a failure in the compressor.

### BRIEF DESCRIPTION OF DRAWINGS

Fig. 1 is an overall configuration diagram of an air conditioner shown as an example of a refrigeration cycle apparatus according to a first embodiment.
Fig. 2 is a diagram showing a flow of refrigerant during a cooling operation.
Fig. 3 is a diagram showing a flow of refrigerant during a heating operation.
Fig. 4 is a block diagram showing an example of a hardware configuration of a controller.
Fig. 5 is a flowchart illustrating an example of each process executed by the controller when a compressor stops.
Fig. 6 is a flowchart illustrating an example of each process executed by the controller when an operation of the compressor starts.
Fig. 7 is a flowchart illustrating an example of each process executed by the controller when the operation of the compressor starts, according to a second embodiment.
Fig. 8 is a flowchart illustrating an example of each process executed by the controller when the operation of the compressor starts, according to a third embodiment.

### DESCRIPTION OF EMBODIMENTS

Embodiments of the present disclosure will be hereinafter described in detail with reference to the accompanying drawings. While a plurality of embodiments will be described below, it has been originally intended at the time of filing of the present application to appropriately combine the configurations described in the embodiments. In the accompanying drawings, the same or corresponding portions will be denoted by the same reference characters, and the description thereof will not be repeated.

### First Embodiment

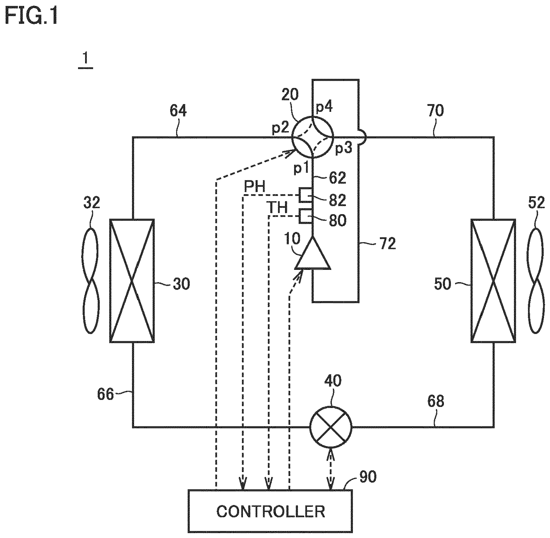

Fig. 1 is an overall configuration diagram of an air conditioner shown as an example of a refrigeration cycle apparatus according to the first embodiment. Referring to Fig. 1, an air conditioner 1 includes a compressor 10, a four-way valve 20, an outdoor heat exchanger 30, a fan 32, a decompression device 40, an indoor heat exchanger 50, a fan 52, pipes 62 to 72, a temperature sensor 80, a pressure sensor 82, and a controller 90.

Indoor heat exchanger 50 and fan 52 are installed as indoor units in a target space (indoors) in which air conditioner 1 performs air conditioning. Compressor 10, four-way valve 20, outdoor heat exchanger 30, fan 32, decompression device 40, temperature sensor 80, pressure sensor 82, and controller 90 are installed as outdoor units outside the target space (for example, outdoors).

Pipe 62 connects a discharge port of compressor 10 and a port p1 of four-way valve 20. Pipe 64 connects a port p2 of four-way valve 20 and outdoor heat exchanger 30. Pipe 66 connects outdoor heat exchanger 30 and decompression device 40. Pipe 68 connects decompression device 40 and indoor heat exchanger 50. Pipe 70 connects indoor heat exchanger 50 and a port p3 of four-way valve 20. Pipe 72 connects a port p4 of four-way valve 20 and a suction port of compressor 10.

Compressor 10 compresses the refrigerant suctioned through pipe 72 and outputs the compressed refrigerant to pipe 62. Compressor 10 is configured to be capable of adjusting an operating frequency in accordance with a control signal from controller 90. By adjusting the operating frequency of compressor 10, the output from compressor 10 is adjusted. Compressor 10 is filled with refrigeration oil in order to ensure the lubricity in compressor 10. Compressor 10 may be of various types such as a rotary type, a reciprocating type, a scroll type, and a screw type, for example.

In accordance with the control signal from controller 90, four-way valve 20 is selectively switched between a first state (in a cooling operation) and a second state (in a heating operation). In the first state, four-way valve 20 allows communication between ports p1 and p2, and allows communication between ports p3 and p4. Thereby, in the first state, pipes 62 and 64 are connected, and pipes 70 and 72 are connected. In the second state, four-way valve 20 allows communication between ports p1 and p3, and allows communication between ports p2 and p4. Thereby, in the second state, pipes 62 and 70 are connected, and pipes 64 and 72 are connected.

Outdoor heat exchanger 30 is configured such that the refrigerant flowing through a heat transfer tube provided inside outdoor heat exchanger 30 exchanges heat with outdoor air. In outdoor heat exchanger 30, during the cooling operation, the high-temperature and high-pressure superheated vapor (refrigerant) flowing from pipe 64 into outdoor heat exchanger 30 exchanges heat with outdoor air (dissipates heat), and thereby, is condensed and liquefied, and then, liquid refrigerant is output to pipe 66. During the heating operation, the refrigerant flowing from pipe 66 into outdoor heat exchanger 30 exchanges heat with outdoor air in outdoor heat exchanger 30, and thereby, evaporates and turns into superheated vapor, which is then output to pipe 64. Fan 32 is provided side by side with outdoor heat exchanger 30, and blows outdoor air into outdoor heat exchanger 30.

Decompression device 40 is formed, for example, of an electronic expansion valve, and the opening degree of decompression device 40 is adjusted in accordance with a control signal from controller 90. When the opening degree changes in a closing direction, the refrigerant pressure on the outlet side of decompression device 40 decreases, and the degree of dryness of the refrigerant rises. When the opening degree changes in an opening direction, the refrigerant pressure on the outlet side of decompression device 40 increases, and the degree of dryness of the refrigerant lowers. During the cooling operation, decompression device 40 decompresses the refrigerant output from outdoor heat exchanger 30 to pipe 66 and outputs the decompressed refrigerant to pipe 68. During the heating operation, decompression device 40 decompresses the refrigerant output from indoor heat exchanger 50 to pipe 68 and outputs the decompressed refrigerant to pipe 66.

Indoor heat exchanger 50 is configured such that the refrigerant flowing through a heat transfer tube provided inside indoor heat exchanger 50 exchanges heat with air inside the target space. In indoor heat exchanger 50, during the cooling operation, the refrigerant flowing from pipe 68 into indoor heat exchanger 50 exchanges heat with the air inside the target space (absorbs heat), and thereby, evaporates and turns into superheated vapor, which is then output to pipe 70. During the heating operation, the high-temperature and high-pressure superheated vapor (refrigerant) flowing from pipe 70 into indoor heat exchanger 50 exchanges heat with the air inside the target space (dissipates heat) in indoor heat exchanger 50, and thereby, is condensed and liquefied, and then, liquid refrigerant is output to pipe 68. Fan 52 is provided side by side with indoor heat exchanger 50 and blows air into indoor heat exchanger 50.

Temperature sensor 80 detects a temperature TH of the refrigerant on the outlet side of compressor 10, and outputs the detection value to controller 90. Pressure sensor 82 detects a pressure PH of the refrigerant on the outlet side of compressor 10, and outputs the detection value to controller 90.

Controller 90 controls each of devices in air conditioner 1. As main control executed by controller 90, based on the detection values of temperature sensor 80 and pressure sensor 82, the detection values of other sensors (not shown), and the like, controller 90 controls the operating frequency of compressor 10 and the opening degree of decompression device 40 such that air conditioner 1 performs a desired air conditioning operation. Further, controller 90 switches four-way valve 20 to the first state when performing a cooling operation, and switches four-way valve 20 to the second state when performing a heating operation.

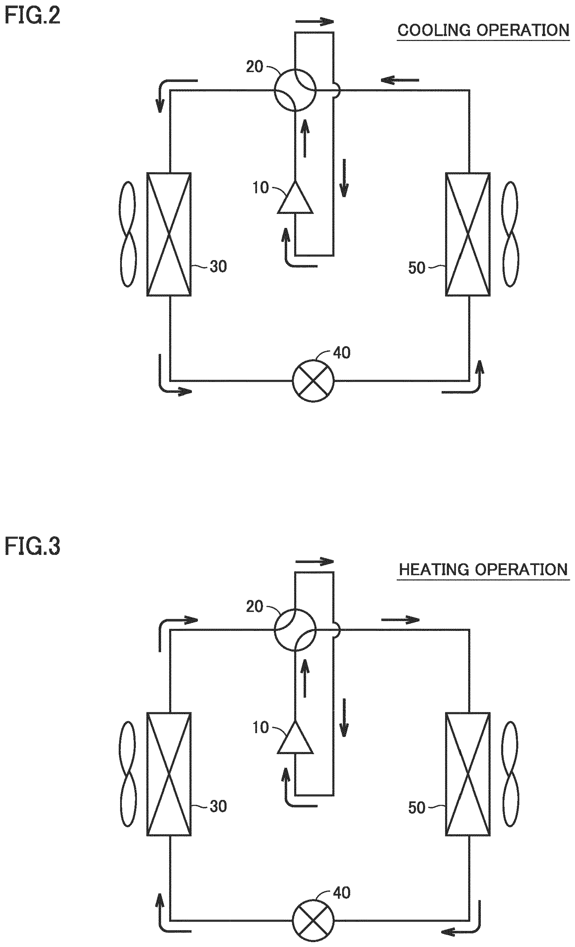

Fig. 2 is a diagram showing a flow of refrigerant during a cooling operation. Referring to Fig. 2, during the cooling operation, the refrigerant brought into a high-temperature and high-pressure vapor state by compressor 10 is supplied to outdoor heat exchanger 30 via four-way valve 20. The refrigerant then exchanges heat with outdoor air in outdoor heat exchanger 30 (dissipates heat), and thereby, is condensed (liquefied) and turns into high-pressure liquid refrigerant.

The refrigerant that has passed through outdoor heat exchanger 30 is decompressed in decompression device 40, and thereby, turns into low-temperature and low-pressure refrigerant, which is then supplied to indoor heat exchanger 50. In indoor heat exchanger 50, the refrigerant exchanges heat with the air inside the target space (absorbs heat), and thereby, evaporates (vaporizes) and turns into low-pressure gas refrigerant. The refrigerant is subsequently suctioned again into compressor 10 via four-way valve 20. Thereby, the (indoor) space in which indoor heat exchanger 50 is installed is cooled.

Fig. 3 is a diagram showing a flow of refrigerant during a heating operation. Referring to Fig. 3, during the heating operation, the refrigerant brought into a high-temperature and high-pressure vapor state by compressor 10 is supplied to indoor heat exchanger 50 via four-way valve 20, and exchanges heat with indoor air in indoor heat exchanger 50 (dissipates heat), and thereby, is condensed (liquefied) and turns into high-pressure liquid refrigerant.

Then, the refrigerant is decompressed in decompression device 40 and supplied to outdoor heat exchanger 30, and exchanges heat with outdoor air in outdoor heat exchanger 30 (absorbs heat), and thereby, is evaporated (vaporized) and turns into low-pressure gas refrigerant. The refrigerant is then suctioned again into compressor 10 via four-way valve 20. Thereby, the (indoor) space in which indoor heat exchanger 50 is installed is heated.

In the refrigeration cycle apparatus as described above, the compressor is filled with refrigeration oil in order to ensure the lubricity in the compressor. The refrigeration oil essentially should be present inside the compressor. However, if liquid refrigerant is present inside the compressor, the liquid refrigerant may mix with refrigeration oil to thereby raise the liquid level (the liquid level of the mixture of the liquid refrigerant and the refrigeration oil) inside the compressor, with the result that the refrigeration oil may flow out together with the refrigerant to the refrigerant circuit when the compressor operates. When the refrigeration oil flows out to the refrigerant circuit and thereby the amount of refrigeration oil inside the compressor decreases, there is a possibility that poor lubricity may cause a failure in the compressor.

In the state of an operation that is not a low-speed and intermittent operation (which may be hereinafter referred to as a "normal operation"), as time passes, discharging of the liquid refrigerant from the compressor progresses and the temperature inside the compressor rises, and thereby, the liquid refrigerant inside the compressor is gasified, with the result that the amount of refrigeration oil flowing out to the refrigerant circuit decreases. Note that the amount of refrigeration oil flowing out to the refrigerant circuit mentioned herein means the flowing-out amount of refrigeration oil relative to the circulation amount of refrigerant. Further, the refrigeration oil having flowed out to the refrigerant circuit circulates through the refrigerant circuit and returns to the compressor. In this way, in the normal operation, as time passes, the amount of refrigeration oil flowing out to the refrigerant circuit decreases, and the refrigeration oil having flowed out to the refrigerant circuit rapidly circulates through the refrigerant circuit and then returns to the compressor.

Accordingly, the amount of refrigeration oil inside the compressor is ensured.

However, in the case in which the compressor is operating at a low speed and intermittently, such as a case in which the difference between the indoor temperature and the set temperature is relatively small, the circulation amount of refrigerant is relatively small, and discharging of the liquid refrigerant from the compressor does not progress. As a result, the amount of refrigeration oil flowing out to the refrigerant circuit (the flowing-out amount of refrigeration oil relative to the circulation amount of refrigerant) is continued to be large. Further, the operation may stop again before the refrigeration oil having flowed out to the refrigerant circuit circulates through the refrigerant circuit and returns to the compressor. For this reason, when the compressor is operating at a low speed and intermittently, the amount of refrigeration oil inside the compressor decreases, so that there is a possibility that poor lubricity may cause a failure in the compressor.

In order to avoid the situation as described above, it is conceivable to take the following measures. Specifically, the degree of wetness of the refrigerant inside the compressor is first estimated, and if the degree of wetness of the refrigerant inside the compressor rises to such an extent that the liquid refrigerant can be determined as being present inside the compressor, the operating frequency (rotation speed) of the compressor is temporarily prohibited from increasing.

However, when the operating frequency of the compressor is uniformly prohibited from increasing based on the degree of wetness of the refrigerant inside the compressor, the operation load of the refrigeration cycle apparatus is unnecessarily suppressed, with the result that the refrigeration performance of the refrigeration cycle apparatus (for example, comfort of air conditioning by the air conditioner, and the like) may degrade.

Thus, in air conditioner 1 according to the present first embodiment, it is determined whether or not the following situation occurs, in which compressor 10 operates at a low speed and intermittently, and thereby, the amount of liquid refrigerant inside compressor 10 increases, so that the amount of refrigeration oil flowing out of compressor 10 increases. Then, if the above-mentioned situation frequently occurs, it is determined that the amount of refrigeration oil inside compressor 10 is highly likely to decrease. Then, the operating frequency of compressor 10 is temporarily prohibited from increasing.

Specifically, a frequency at which compressor 10 stops is counted. More specifically, the frequency counted in this case is a frequency (the number of times in a certain time period) at which compressor 10 stops when the degree of superheat of the refrigerant discharged from compressor 10 (hereinafter referred to as a "discharge-side superheat degree SH") is lower than a set value. Discharge-side superheat degree SH is correlated with the degree of wetness of the refrigerant inside compressor 10, and is used as an indicator for making a determination about occurrence of a situation in which the amount of the liquid refrigerant inside compressor 10 increases and thereby the amount of refrigeration oil flowing out of compressor 10 increases. The frequency at which compressor 10 stops when discharge-side superheat degree SH is lower than the set value is used as an indicator for making a determination about occurrence of a situation in which the amount of refrigeration oil inside compressor 10 decreases due to frequent occurrence of a situation in which a relatively large amount of refrigeration oil flows out of compressor 10.

Then, (i) when the frequency at which compressor 10 stops when discharge-side superheat degree SH is lower than the set value exceeds a prescribed value, and (ii) when discharge-side superheat degree SH is lower than the set value after start of the operation of compressor 10, control for prohibiting the operating frequency of compressor 10 from increasing is executed. When the frequency at which compressor 10 stops when discharge-side superheat degree SH is lower than the set value exceeds the prescribed value, the amount of refrigeration oil inside compressor 10 is highly likely to decrease. Further, when discharge-side superheat degree SH is lower than the set value after start of the operation of compressor 10, the amount of refrigeration oil flowing out of compressor 10 increases. Thus, the operating frequency of compressor 10 is prohibited from increasing, to thereby prevent a failure from occurring in compressor 10 due to poor lubricity.

On the other hand, when the frequency at which compressor 10 stops when discharge-side superheat degree SH is lower than the set value is equal to or less than the prescribed value, the operating frequency of compressor 10 is permitted to increase. When the above-mentioned frequency is equal to or less than the prescribed value, it is assumed that the amount of refrigeration oil inside compressor 10 does not decrease to such an extent that lubricity becomes poor in compressor 10. Thus, the operating frequency of compressor 10 is permitted to increase.

In the present first embodiment, also when discharge-side superheat degree SH is equal to or greater than the set value after start of the operation of compressor 10, the operating frequency of compressor 10 is permitted to increase. Also when discharge-side superheat degree SH becomes equal to or greater than the set value during execution of the control for prohibiting the operating frequency of compressor 10 from increasing, the operating frequency of compressor 10 is permitted to increase. When discharge-side superheat degree SH is equal to or greater than the set value, the amount of refrigeration oil flowing out of compressor 10 does not increase, and thus, the operating frequency of compressor 10 is permitted to increase.

As described above, in air conditioner 1 according to the present first embodiment, the operating frequency of compressor 10 is not uniformly prohibited from increasing based on discharge-side superheat degree SH. Instead, (i) when the frequency at which compressor 10 stops when discharge-side superheat degree SH is lower than the set value exceeds the prescribed value, and (ii) when discharge-side superheat degree SH is lower than the set value after start of the operation of compressor 10, the operating frequency of compressor 10 is prohibited from increasing. Then, when the frequency is equal to or less than the prescribed value, the operating frequency of compressor 10 is permitted to increase. This makes it possible to ensure comfort of air conditioning while preventing the refrigeration oil inside compressor 10 from decreasing and thus causing a failure in compressor 10. Further, also when discharge-side superheat degree SH is equal to or greater than the set value after start of the operation of compressor 10, the operating frequency of compressor 10 is permitted to increase. Thus, also in this point, comfort of air conditioning can be ensured.

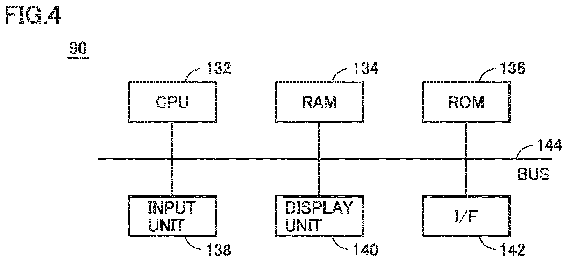

Fig. 4 is a block diagram showing an example of a hardware configuration of controller 90 that implements the control as described above. Referring to Fig. 4, controller 90 includes a central processing unit (CPU) 132, a random access memory (RAM) 134, a read only memory (ROM) 136, an input unit 138, a display unit 140, and an I/F unit 142. RAM 134, ROM 136, input unit 138, display unit 140, and I/F unit 142 are connected to CPU 132 through a bus 144.

CPU 132 deploys a program, which is stored in ROM 136, in RAM 134 and executes the program. The program stored in ROM 136 is a program describing the processing procedure for controller 90. Air conditioner 1 controls each of devices in air conditioner 1 in accordance with these programs. Note that these controls are not necessarily processed by software, but can also be processed by dedicated hardware (an electronic circuit).

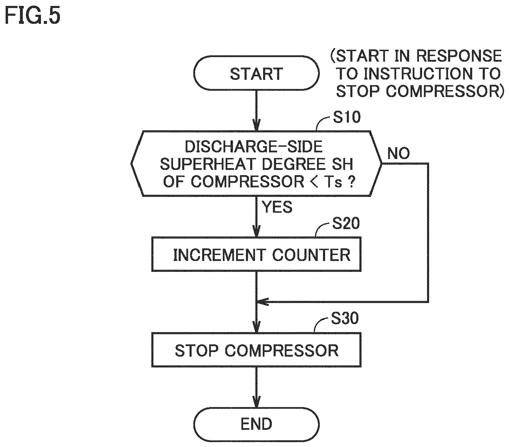

Fig. 5 is a flowchart illustrating an example of each process executed by controller 90 when compressor 10 stops. A series of processes shown in this flowchart are executed in response to an instruction to stop compressor 10. Compressor 10 may be stopped in response to a request from outside by a user or the like, or may be stopped in response to a request from the control executed when the indoor temperature becomes close to a set temperature.

Referring to Fig. 5, controller 90 determines whether or not discharge-side superheat degree SH indicating the degree of superheat of the refrigerant output from compressor 10 is lower than a set value Ts (step S10). As described above, discharge-side superheat degree SH is a parameter reflecting the amount of liquid refrigerant inside compressor 10. Thus, as the amount of liquid refrigerant inside compressor 10 increases, discharge-side superheat degree SH decreases. In other words, in step S10, it is determined whether the amount of liquid refrigerant inside compressor 10 is relatively large or not. As described above, in the state in which the amount of liquid refrigerant inside compressor 10 is relatively large, a relatively large amount of refrigeration oil flows out of compressor 10 into the refrigerant circuit when compressor 10 is operated.

Discharge-side superheat degree SH can be calculated from the detection values of temperature sensor 80 and pressure sensor 82. Specifically, the difference between temperature TH and the refrigerant saturation temperature can be calculated as discharge-side superheat degree SH. In this case, temperature TH is detected by temperature sensor 80 (the temperature of the refrigerant output from compressor 10), and the refrigerant saturation temperature is converted from pressure PH detected by pressure sensor 82 (the pressure of the refrigerant output from compressor 10).

Set value Ts is set, for example, at a degree of superheat that is sufficient for all the liquid refrigerant inside compressor 10 to gasify. When discharge-side superheat degree SH is lower than set value Ts, liquid refrigerant is present in compressor 10, and thus, it is determined that the amount of refrigeration oil flowing out of compressor 10 is relatively large. Set value Ts is set as appropriate, for example, by preliminary evaluation experiments or the like.

When it is determined in step S10 that discharge-side superheat degree SH is lower than set value Ts (YES in step S10), controller 90 increments the value of a counter (step S20). The counter serves to measure the frequency (the number of times in a certain time period) at which compressor 10 stops when discharge-side superheat degree SH is lower than set value Ts. When the frequency at which compressor 10 stops when discharge-side superheat degree SH is lower than set value Ts is relatively high, the amount of refrigeration oil inside compressor 10 is highly likely to decrease. Although not particularly shown, the counter is reset to zero when the compressor continuously operates for a certain time period.

When the counter is incremented in step S20, or when it is determined in step S10 that discharge-side superheat degree SH is equal to or greater than set value Ts (NO in step S10), controller 90 stops compressor 10 (step S30).

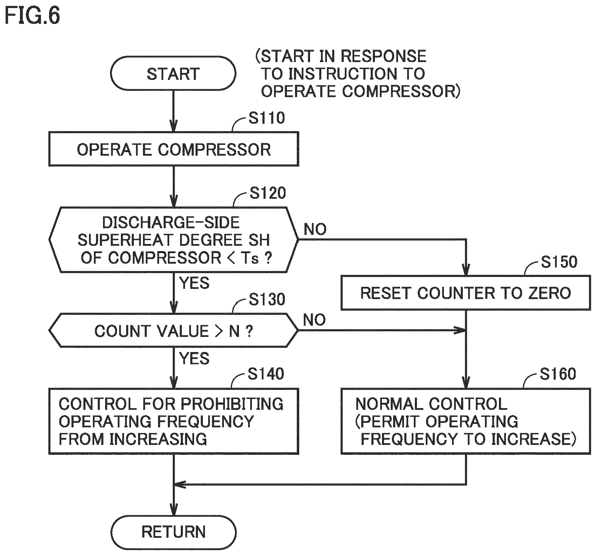

Fig. 6 is a flowchart illustrating an example of each process executed by controller 90 when the operation of compressor 10 starts. A series of processes shown in the flowchart are executed in response to an instruction to operate compressor 10. The operation of compressor 10 may be started in response to a request from outside by a user or the like, or may be started in response to a request from the control executed based on the temperature.

Referring to Fig. 6, controller 90 operates compressor 10 in response to an instruction to operate compressor 10 (step S110). Then, controller 90 determines whether or not discharge-side superheat degree SH is lower than set value Ts (step S120). As described also in step S10 in Fig. 5, it is determined in step S120 whether the amount of liquid refrigerant present inside compressor 10 is relatively large or not, i.e., whether the amount of refrigeration oil flowing out of compressor 10 into the refrigerant circuit is relatively large or not. In the present example, set value Ts used in step S120 is the same as set value Ts used in step S10 in Fig. 5, but both the set values do not necessarily have to be the same.

When it is determined in step S120 that discharge-side superheat degree SH is lower than set value Ts (YES in step S120), controller 90 further determines whether or not a count value of the counter exceeds a prescribed value N (step S130). This count value indicates the frequency at which compressor 10 stops when discharge-side superheat degree SH is lower than set value Ts. When the count value exceeds the prescribed value, it is determined that the amount of refrigeration oil inside compressor 10 decreases since a certain amount or more of refrigeration oil has flowed out of compressor 10. Prescribed value N is set at the number of times, for example, at which no failure occurs in compressor 10 due to poor lubricity even when compressor 10 normally operates at the amount of refrigeration oil that is reduced by the intermittent operation of compressor 10. This prescribed value N is set as appropriate by preliminary evaluation experiments or the like.

When it is determined in step S130 that the count value exceeds prescribed value N (YES in step S130), controller 90 executes control for prohibiting the operating frequency of compressor 10 from increasing (step S140). Specifically, when the count value exceeds prescribed value N and when discharge-side superheat degree SH is lower than set value Ts, the operating frequency of compressor 10 is prohibited from increasing. In other words, when the amount of refrigeration oil inside compressor 10 decreases after start of the operation of compressor 10 (YES in step S130), and when the amount of refrigeration oil flowing out of compressor 10 is relatively large (YES in step S 120), then, the operating frequency of compressor 10 is prohibited from increasing. This is because, if the operating frequency of compressor 10 is increased in such a situation, the refrigeration oil inside compressor 10 runs out, and thus, poor lubricity may cause a failure in compressor 10.

On the other hand, when it is determined in step S130 that the count value is equal to or less than prescribed value N (NO in step S130), controller 90 executes normal control for permitting the operating frequency of compressor 10 to increase (step S160). Specifically, even when discharge-side superheat degree SH is lower than set value Ts (YES in step S120), but when the count value is equal to or less than prescribed value N, the operating frequency of compressor 10 is permitted to increase. In other words, even when the amount of refrigeration oil flowing out of compressor 10 is relatively large, but when the amount of refrigeration oil inside compressor 10 does not decrease, the operating frequency of compressor 10 is permitted to increase.

When it is determined in step S120 that discharge-side superheat degree SH is equal to or greater than set value Ts (NO in step S120), controller 90 resets the counter to zero (step S150). Then, controller 90 shifts the process to step S160, and executes the normal control for permitting the operating frequency of compressor 10 to increase. When discharge-side superheat degree SH is equal to or greater than set value Ts, it is determined that the refrigerant inside compressor 10 is gasified. Thus, there is no need for concern that the amount of refrigeration oil inside compressor 10 may decrease due to the refrigeration oil flowing out of compressor 10, and accordingly, the counter is reset.

As described above, in the present first embodiment, (i) when the frequency at which compressor 10 stops when discharge-side superheat degree SH is lower than set value Ts exceeds prescribed value N, and (ii) when discharge-side superheat degree SH is lower than set value Ts after start of the operation of compressor 10, the operating frequency of compressor 10 is prohibited from increasing. On the other hand, even when discharge-side superheat degree SH is lower than set value Ts, but when the frequency is equal to or lower than prescribed value N, the operating frequency of compressor 10 is permitted to increase. Also when discharge-side superheat degree SH is equal to or greater than set value Ts, the operating frequency of compressor 10 is permitted to increase. Therefore, according to the present first embodiment, the comfort of air conditioning can be ensured while preventing the refrigeration oil inside compressor 10 from decreasing and thus causing a failure in compressor 10.

### Second Embodiment

In the present second embodiment, in the case in which the counter is reset to zero when discharge-side superheat degree SH becomes equal to or greater than set value Ts after start of the operation of compressor 10, the counter is reset to zero after a certain time period has elapsed. In this case, when discharge-side superheat degree SH becomes equal to or greater than set value Ts, the amount of refrigeration oil flowing out of compressor 10 into the refrigerant circuit decreases, but there is still a possibility that the refrigeration oil having flowed out to the refrigerant circuit may not sufficiently return to compressor 10. Thus, a time margin is given such that the refrigeration oil having flowed out to the refrigerant circuit is sufficiently recovered into compressor 10.

The overall configuration of the air conditioner according to the second embodiment is the same as that of air conditioner 1 according to the first embodiment shown in Figs. 1 to 4. Also in the air conditioner according to the second embodiment, a series of processes shown in the flowchart in Fig. 5 are executed when compressor 10 stops.

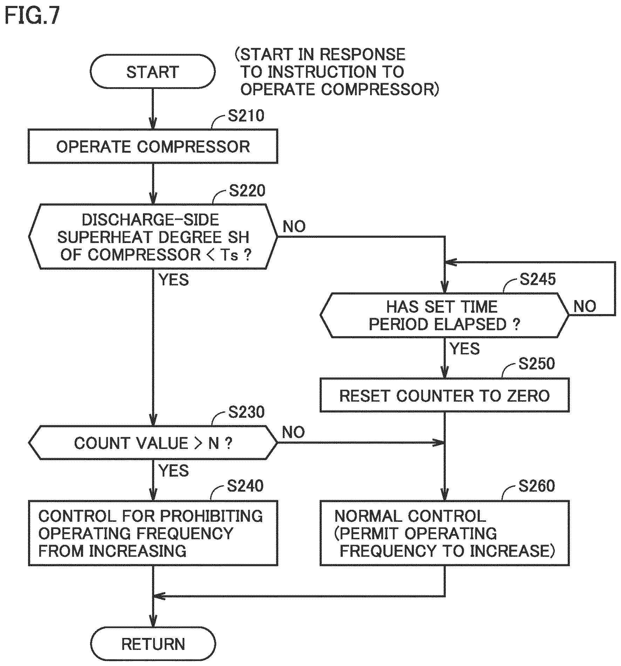

Fig. 7 is a flowchart illustrating an example of each process executed by controller 90 when the operation of compressor 10 starts, according to the second embodiment. This flowchart corresponds to the flowchart shown in Fig. 6 in the first embodiment. The series of processes shown in this flowchart are also executed in response to an instruction to operate compressor 10.

Referring to Fig. 7, the processes executed in steps S210 to S240, S250 and S260 are the same as the respective processes executed in steps S110 to S160 in Fig. 6.

In the present second embodiment, when it is determined in step S220 that discharge-side superheat degree SH is equal to or greater than set value Ts (NO in step S220), after the set time period has elapsed (YES in step S245), controller 90 shifts the process to step S250 and then resets the counter to zero. This set time period is set as appropriate to a time period during which the refrigeration oil having flowed out of compressor 10 into the refrigerant circuit is sufficiently returned to compressor 10.

Although not particularly shown, when the value of the counter is already zero when it is determined in step S220 that discharge-side superheat degree SH is equal to or greater than set value Ts, controller 90 may shift the process to step S260 without executing the processes in steps S245 and S250.

As described above, according to the present second embodiment, the time margin is given such that the refrigeration oil having flowed out to the refrigerant circuit is sufficiently recovered into compressor 10, which makes it possible to increase the operating frequency of compressor 10 in the state in which a sufficient amount of refrigeration oil is present in compressor 10.

### Third Embodiment

In the above-described first and second embodiments, (i) when discharge-side superheat degree SH is lower than set value Ts (YES in steps S120 and S220), and further, (ii) when the value of the counter indicating the frequency at which compressor 10 stops when discharge-side superheat degree SH is lower than set value Ts exceeds prescribed value N (YES in steps S130 and S230), the control for prohibiting the operating frequency of compressor 10 from increasing is executed (steps S140 and S240). In place of or in addition to this control for prohibiting the operating frequency of compressor 10 from increasing, the control for quickly increasing discharge-side superheat degree SH may be executed.

The overall configuration of the air conditioner according to the third embodiment is also the same as that of air conditioner 1 shown in each of Figs. 1 to 4. Also in the air conditioner according to the present third embodiment, a series of processes shown in the flowchart in Fig. 5 are executed when compressor 10 stops.

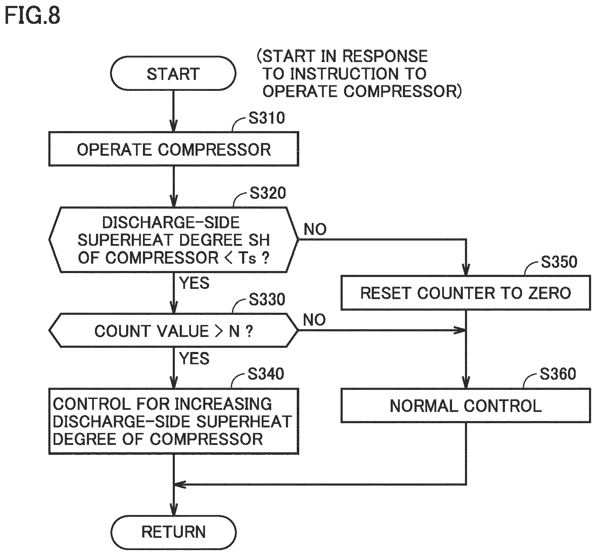

Fig. 8 is a flowchart illustrating an example of each process executed by controller 90 when the operation of compressor 10 starts, according to the third embodiment. This flowchart corresponds to the flowchart shown in Fig. 6 in the first embodiment. A series of processes shown in this flowchart are also executed in response to an instruction to operate compressor 10.

Referring to Fig. 8, the processes executed in steps S310 to S330, S350, and S360 are the same as the respective processes executed in steps S110 to S130, S150, and S160 in Fig. 6.

Then, in the present third embodiment, when it is determined in step S330 that the count value exceeds prescribed value N (YES in step S330), controller 90 executes control for increasing discharge-side superheat degree SH (step S340).

For example, discharge-side superheat degree SH can be increased by decreasing the opening degree of decompression device 40. Alternatively, discharge-side superheat degree SH can be increased by increasing the rotation speed of the fan of the heat exchanger functioning as an evaporator (fan 52 of indoor heat exchanger 50 used in the cooling operation or fan 32 of outdoor heat exchanger 30 used in the heating operation) or by decreasing the rotation speed of the fan of the heat exchanger functioning as a condenser (fan 32 used in the cooling operation or fan 52 used in the heating operation).

In the above description, in place of the control for prohibiting the operating frequency of compressor 10 from increasing, the control for increasing discharge-side superheat degree SH is executed, but the control for increasing discharge-side superheat degree SH may be executed together with the control for prohibiting the operating frequency of compressor 10 from increasing, as described above. Specifically, the control for increasing discharge-side superheat degree SH (step S340) may be executed in the flowchart shown in Fig. 6, together with the control for prohibiting the operating frequency of compressor 10 from increasing (step S140).

According to the present third embodiment, executing the control for increasing discharge-side superheat degree SH can facilitate discharging of the liquid refrigerant inside compressor 10, which makes it possible to early eliminate the state in which the amount of refrigeration oil decreases inside compressor 10.

Also in the present third embodiment, in resetting the counter to zero in step S350, the counter may be reset after the set time period has elapsed as described in the second embodiment.

Although an air conditioner has been described as an example of the refrigeration cycle apparatus in each of the above embodiments, the refrigeration cycle apparatus according to the present disclosure is not limited to an air conditioner but may be applicable also to a refrigeration cycle apparatus used in a warehouse, a showcase, or the like.

The embodiments disclosed herein are also intended to be implemented in combination as appropriate within a technically consistent scope. It should be construed that the embodiments disclosed herein are illustrative and non-restrictive in every respect. The technical scope indicated by the present disclosure is defined by the terms of the claims, rather than the description of the above-described embodiments, and is intended to include any modifications within the meaning and scope equivalent to the terms of the claims.

### REFERENCE SIGNS LIST

1 air conditioner, 10 compressor, 20 four-way valve, 30 outdoor heat exchanger, 32, 52 fan, 40 decompression device, 50 indoor heat exchanger, 62 to 72 pipe, 80 temperature sensor, 82 pressure sensor, 90 controller, 132 CPU, 134 RAM, 136 ROM, 138 input unit, 140 display unit, 142 I/F unit, 144 bus.

## Claims

1. A refrigeration cycle apparatus comprising:
a compressor configured to compress refrigerant; and
a controller configured to control the compressor, wherein
the controller is configured to
execute control for prohibiting an operating frequency of the compressor from increasing (i) when a stop frequency of the compressor exceeds a prescribed value and (ii) when a degree of superheat of the refrigerant output from the compressor is lower than a set value after start of an operation of the compressor, the stop frequency being a frequency at which the compressor stops when the degree of superheat is lower than the set value, and
permit the operating frequency to increase when the stop frequency is equal to or lower than the prescribed value.

2. The refrigeration cycle apparatus according to claim 1, wherein the controller is configured to permit the operating frequency to increase when the degree of superheat is equal to or greater than the set value.

3. The refrigeration cycle apparatus according to claim 2, wherein the controller is configured to stop the control and permit the operating frequency to increase when the degree of superheat becomes equal to or greater than the set value during execution of the control.

4. The refrigeration cycle apparatus according to claim 3, wherein the controller is configured to stop the control and permit the operating frequency to increase after a preset time period has elapsed when the degree of superheat becomes equal to or greater than the set value during execution of the control.

5. The refrigeration cycle apparatus according to any one of claims 1 to 4, wherein the controller is configured to further execute control for increasing the degree of superheat in a case in which the stop frequency exceeds the prescribed value when the degree of superheat is lower than the set value.

6. An air conditioner comprising the refrigeration cycle apparatus according to any one of claims 1 to 5.

7. A method of controlling a refrigeration cycle apparatus, the method comprising:
determining whether or not a degree of superheat of refrigerant output from a compressor configured to compress refrigerant is lower than a set value after start of an operation of the compressor;
when it is determined that the degree of superheat is lower than the set value, determining whether or not a stop frequency of the compressor exceeds a prescribed value, the stop frequency being a frequency at which the compressor stops when the degree of superheat is lower than the set value;
when it is determined that the stop frequency exceeds the prescribed value, executing control for prohibiting an operating frequency of the compressor from increasing; and
when it is determined that the stop frequency is equal to or lower than the prescribed value, permitting the operating frequency to increase.

8. The method of controlling a refrigeration cycle apparatus according to claim 7, further comprising permitting the operating frequency to increase when it is determined that the degree of superheat is equal to or greater than the set value after start of an operation of the compressor.

9. The method of controlling a refrigeration cycle apparatus according to claim 8, wherein the permitting the operating frequency to increase is performed when the degree of superheat becomes equal to or greater than the set value during execution of the control.

10. The method of controlling a refrigeration cycle apparatus according to claim 9, further comprising
determining whether a preset time period has elapsed or not when the degree of superheat becomes equal to or greater than the set value during execution of the control, wherein
the permitting the operating frequency to increase is performed when the preset time period has elapsed.

11. The method of controlling a refrigeration cycle apparatus according to any one of claims 7 to 10, further comprising executing control for increasing the degree of superheat when it is determined that the stop frequency exceeds the prescribed value.
